# EUROPEAN PATENT APPLICATION

(11) **EP 4 738 274 A1**
(43) Date of publication of application: **06.05.2026**
(21) Application number: 24383188.0
(22) Date of filing: 30.10.2024
(51) Int. Cl.: G06V 10/22, G06V 10/774, G06V 10/80, G06V 10/82, G06V 10/94, G06V 20/17

(54) **AERIAL IMAGE-BASED OBJECT DETECTION METHOD, SYSTEM AND TRAINING METHOD**

(71) Applicant: Airbus Defence and Space, S.A.U., 28906 Getafe - Madrid (ES)
(72) Inventor: BELENGUER ALMECIJA, Salvador, 28906 Getafe, Madrid (ES); SÁNCHEZ DE RIVERA CÓRDOBA, Diego, 28906 Getafe, Madrid (ES)
(74) Representative: Elzaburu S.L.P.

(57) **Abstract**

Aerial image-based object detection method using of a neural network model comprising an input size, the method comprising the following steps:
- taking a 2D image (1),
- dividing the taken 2D image (1) into patches (2) of size equal to the input size of the neural network model,
- saving the coordinates of the same reference point for each of the patches (2),
- resizing the taken 2D image (1) to the input size of the neural network model,
- saving the coordinate of a reference point of the resized taken 2D image (1) and the scale of the resize,
- stacking into a batch (3) the patches (2) and the resize of the taken 2D image (1),
- passing the batch (3) to the neural network model to determine object detections,
- transforming the local detections to a reunified image (4) by using the saved patch coordinates.

## Description

### FIELD OF THE INVENTION

The present invention relates to the field of image-based detection and uses data-driven Artificial Intelligence (AI), more specifically, Deep Learning (DL).

### BACKGROUND OF THE INVENTION

Currently, different domains like autonomous drones, robotics and self-driving cars find the application of Deep Learning (DL) beneficial to meet unalike intended functions such as Situation Awareness (SA), Guidance, Navigation and Control (GNC) and/or Intelligence, Surveillance, and Reconnaissance (ISR). When compared to classical methods in Computer Vision (CV), Deep Learning (DL) excels at providing understanding of the environment and intelligent and complex pattern recognition.

Apart from image classification, object detection and segmentation in 2D images has been one of the most extensively studied problems since the inception of neural networks with AlexNet winning the Large Scale Visual Recognition Challenge (LSVRC) in 2012. Following up with the advent of the Deep Learning (DL) era, the current state-of-the-art in object detection is mostly dominated by two architectural categories, namely, Convolutional Neural Networks (CNNs) and visual transformers or a mixture of both.

In the case of Convolutional Neural Networks (CNNs), most architectures for object detection include a backbone/encoder for extracting features, typically variants of networks used for classification, a neck for multi-scale feature fusion to detect at multiple scales and the detection head to decode the features into object detections and category scores. Furthermore, the task can be accomplished in a single pass with One-Stage Detectors (OSDs) or in a dual proposal-refinement pass with Two-Stage Detectors (TSDs). While the first group is more real-time compliant, the second group tends to provide better performance at the expense of more computational cost. In addition to this, the detection can be anchor-based, by inferring bounding box deviations from a predefined grid, which is very sensitive to grid selection and benefits from having multiple grids, or in a more generalizable anchor-free fashion by predicting directly the bounding box.

In object detection, a bounding box to is used to describe the spatial location of an object. The bounding box is square or rectangular, which is determined by the x and y coordinates of the upper-left corner of the rectangle and the such coordinates of the lower-right corner. Another commonly used bounding box representation is the (x,y)-axis coordinates of the bounding box center and the width and height of the box.

Many datasets have risen as a way to fairly benchmark a wide variety of neural networks for different tasks. For image classification and/or object detection, popular datasets include ImageNet where object detector backbones/encoders are trained, Pascal VOC12, MS COCO or KITTI, etc. These datasets mostly include low-resolution images (640 × 480) with considerably large objects and pixel coverage, 60% of the image size on average. Because of this, while any pretrained model might have successful detection performances for those types of input data, the performance yielded on small object detection datasets like Visdrone and xView is considerably reduced. Since small object detection is usually the case in aerial/space views with high-resolution, high-end, cameras, it is only normal that out-of-the-box detectors struggle in these operational environments. Relatively small pixel coverage pushes the limits of neural-based methods, with greater needs in terms of memory/computation.

Detecting small-looking objects normally requires from higher resolution cameras, but this implies drawbacks regarding the use of neural networks:
- As resolution is increased, the depth and width of neural networks needs also to be scaled up to maintain the optimal structure of the architecture, causing an exponential cost rise in computational needs.
- Bigger neural networks have more parameters, typically requiring more data to be trained in order to fill the extra capacity of the network. In turn, this increases the overall development/testing time and cost.
- Since training the neural network takes longer as it is made bigger and needs to process full resolution images, development/testing efforts become even longer and more expensive.
- As neural networks grow in size, inference/prediction also becomes slower and more hardware (HW) demanding, which might not be suitable for resource constrained real-time applications.
- There is a limit to how much resolution a neural network can be trained for, also depending on the Graphics Processing Unit (GPU) or Deep Learning DL-specific ASIC memory available in the training infrastructure.
- Neural network inference/prediction in the deployment application is performed in a streaming fashion, not benefiting at all from batch processing in Graphics Processing Units (GPU).

### SUMMARY OF THE INVENTION

It is an object of the current invention an aerial image-based object detection method comprising the use of a neural network model running on a Graphics Processing Unit (GPU). More specifically, in an embodiment, the neural network model runs end-to-end on the Graphics Processing Unit (GPU), preprocessing and postprocessing included. Taking into account that the neural network model has a predetermined input size, in inference time, the method comprises the following steps:
- taking a 2D image by an image capturing device,
- dividing in the Graphics Processing Unit (GPU) the taken 2D image into patches of size equal to the input size of the neural network model,
- saving in the Graphics Processing Unit the coordinates of the same reference point for each of the patches,
- resizing the taken 2D image to the input size of the neural network model in the Graphics Processing Unit (GPU),
- saving in the Graphics Processing Unit (GPU) the coordinate of a reference point of the resized taken 2D image and the scale of the resize,
- stacking into a batch the patches and the resize of the taken 2D image in the Graphics Processing Unit (GPU),
- passing or running the batch to the neural network model to determine detections in each stacked patch and in the resized image,
- transforming the local detections to a reunified image by using the saved patch coordinates so that said reunified image is formed.

According to the above, the proposed method acts as a wrapper to object detectors, implementing Graphics Processing Unit GPU-friendly routines for pre-processing and post-processing. The batches are processed altogether in parallel by the Graphics Processing Unit (GPU), achieving a boost in performance in per image inference time.

For this invention, it is understood that a patch is a subsection or portion of an input image.

It is understood that input size refers to the dimension of the input image, width * height, in pixels. In the end, what is done is to adapt the taken image to the size of the input of the neural network.

It is understood by coordinates of the same reference point the group of numbers used to indicate the position of a same point in the different patches. Thus, the object detection is performed by the neural network model detecting the objects in each stacked patch and in the resized image.

Just like satellite space views, aerial views tend to perceive the objects as looking small, mainly because of typical sensor-to-object distances. As such, it is typical for aircraft flying information to look tiny to the camera in the mid/far field, even more when the target is small per se or the Field of View (FoV) of the camera is wide.

Out of all patches, the downsized full image covers the near field, i.e., objects that in the process of generating slices or patches may have been deprived of too much spatial context, also known as receptive field.

In an embodiment, the patches in which the taken 2D image are divided into are overlapping patches/slices. Each of the overlapping patches cover far field and specific regions of the input image.

Because of this handling of the input image, computational cost only scales linearly with the input size. For this reason, the claimed invention allows Deep Learning (DL) algorithms to run in real-time using even high-resolution images when looking for both small and big objects.

The proposed invention is able to fix some caveats in using Deep Learning (DL) in high-resolution images. In particular, the proposed invention brings several advantages over trying to directly scale-up Deep Learning (DL) models:
- The method in question makes it possible for the training to be performed at lower resolution by decoupling training from high-resolution inference. This substantially reduces training times, training hardware requirements and reduces development/testing cost.
- The method exhibits great performance for small object detection in the mid/far field and can be easily made performant for the near field as well. It increases the operational range over using other preprocessing strategies before the deep learning (DL) model like image down sampling, resizing, alone.
- In inference/prediction, the method benefits from batch processing on Graphics Process Units (GPUs) by creating a virtual batch from the full high-resolution image. This batch is processed altogether in parallel by the Graphics Process Unit (GPU), achieving a boost in performance in per image inference time.
- The method changes the way inference is carried out, being a wrapper to any object detection model no matter the architecture. As such, it can be virtually used with any 2D object detector as a framework-agnostic pre/post processing.
- It can be potentially extended to other tasks such as key point detection and instance segmentation. In fact, it potentially benefits from instance segmentation, improving robustness to occlusions.
- As the invention is also sensor-agnostic, it can be likewise applied to high-resolution cameras in the infrared part of the spectrum or multispectral cameras. It would simply require training the inner detector to extract features on these camera data distributions.
- When coupled with a tracker, that adds memory to the system, the method can be extended to intelligently search over image patches of interest, reduce computational cost and accelerate inference/prediction.

To extract the full potential of this invention, the input data needs to follow a similar distribution when training the neural network to what it is going to receive during inference, thus, it is also an object of this invention a training method of a neural network model on a Graphics Processing Unit (GPU) of the aerial image-based detection method.

More specifically, augmented images are generated by applying transformations to some images in a training dataset.

Therefore, from training data set comprising 2D images the training method comprises the step of performing training data augmentation by:
- using labels in the form of bounding boxes or instance segmentation masks to generate binary mask images of the 2D images,
- cropping regions around objects in the generated binary mask images, said cropped regions being of size equal to the input size of the neural network model,
- feeding the images corresponding to the cropped regions to the neural network model.

This augmentation may be additive to other typical techniques to train neural nets and boosts inference performance in the tiled prediction setting.

It is also an object of the present invention a computer-readable storage medium comprising instructions which, when executed in a Graphics Processing Unit (GPU), causes the Graphics Processing Unit (GPU) to carry out the above method.

It is also an object of the present invention an image-based object detection system comprising a neural network model running on a Graphics Processing Unit (GPU), the system comprising:
- an image capturing device configured for taking a 2D image,
- the Graphics Processing Unit (GPU) being configured for:
   - receiving the taken 2D image from the image capturing device,
   - dividing the taken 2D image into patches of size equal to the input size of the neural network model,
   - saving the coordinate of the same reference point for each of the patches,
   - resizing the taken 2D image to the input size of the neural network model,
   - saving the coordinate of a reference point of the resized taken 2D image and the scale of the resize,
   - stacking into a batch the patches and the resize of the taken 2D image in the graphics processing unit (GPU),
   - passing the batch to the neural network model to determine detections in each stacked patch and in the resized image,
   - transforming the local detections to a reunified image by using the saved patches coordinates.

The claimed invention has applications in the in-flight detection, recognition and/or identification of surrounding platforms, e.g. aircraft or helicopters. As such, the invention can be used or adapted to operational scenarios such as formation flights in the context of Future Combat Air System (FCAS) or Air-to-Air Refuelling (AAR), or to aid in general in-flight collision avoidance, whether it be for adding relative navigational value or just Situational Awareness (SA).

### DESCRIPTION OF THE FIGURES

To complete the description and to provide for a better understanding of the invention, drawings are provided. Said drawings form an integral part of the description and illustrate preferred embodiments of the invention. The drawings comprise the following figures.
Figure 1 shows a taken image from an aircraft of a refueling boom and two aerial objects located in the taken image.
Figure 2 shows a schematic representation of an embodiment of the method of the invention.
Figure 3 shows a schematic representation of the augmentation applied during the training of neural networks for application together with the detection method.

### DETAILED DESCRIPTION OF THE INVENTION

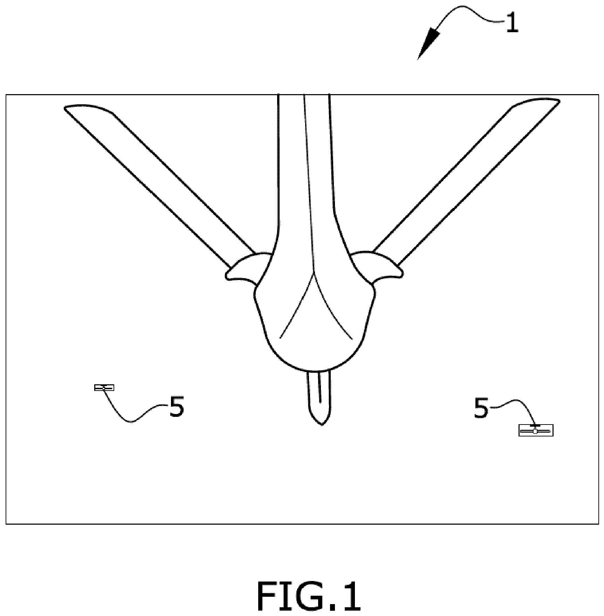

Figure 1 shows a taken image (1) from an aircraft of a refueling boom and two aerial objects (5) in the taken image (1). Specifically, it shows how an approximately 3 m wingspan aircraft looks like in a taken image (1) from another aircraft 650 m away. It is typical for aircraft flying information to look tiny to the image capturing device in the mid/far field, even more when the target is small per se.

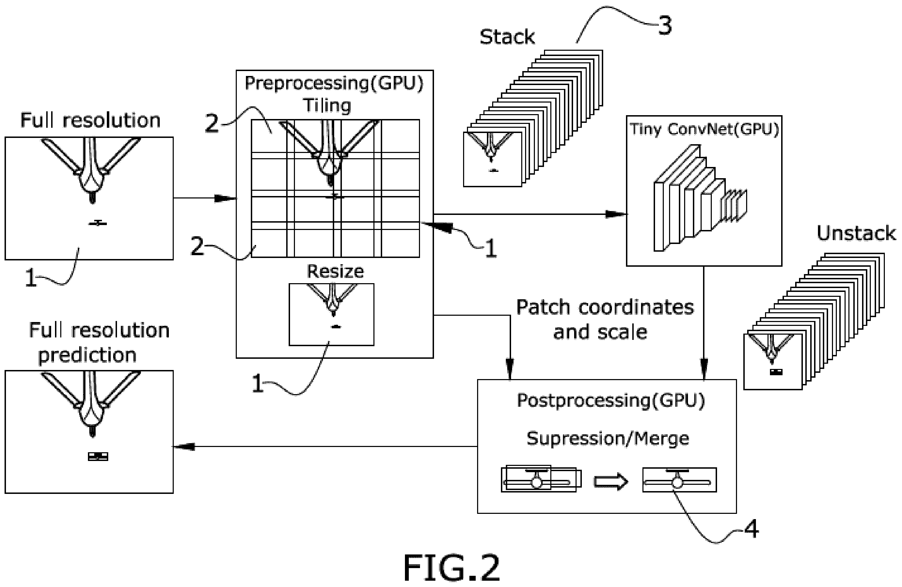

Figure 2 shows an embodiment of the current invention comprising the following steps:
- taking a 2D image (1) by an image capturing device,
- dividing in the Graphics Processing Unit (GPU) the taken 2D image (1) into patches (2) of size equal to the input size of the neural network model,
- saving in the Graphics Processing Unit (GPU) the coordinates of the same reference point for each of the patches (2),
- resizing the taken 2D image (1) to the input size of the neural network model in the Graphics Processing Unit (GPU),
- saving in the Graphics Processing Unit (GPU) the coordinate of a reference point of the resized taken 2D image (1) and the scale of the resize,
- stacking into a batch (3) the patches (2) and the resize of the taken 2D image (1) in the Graphics Processing Unit (GPU),
- passing the batch (3) to the neural network model to determine detections in each stacked patch (2) and in the resized image (1),
- transforming the local detections to a reunified image (4) by using the saved patch coordinates.

In an embodiment, the patches (2) are overlapping patches (2). Although overlapping patches (2) is not necessary, it has the advantage that it helps when spatial context is lost when cutting objects as a result of the patching process. The overlaps increase the box removal/merge metrics at the expense of computational cost.

Tiling is a powerful computer vision approach, which sees a large image broken into many separate, smaller "tiles" and then reassembled. Tiling has been typically used for detecting objects in high-resolution satellite imagery but not in aerial views. Its application to space views benefits from the data distribution to make assumptions such as that the objects in the image will look small enough to fit into the patches.

Patching the image has the disadvantage that the global spatial context or receptive field of the inner neural network is constrained to the size of the patch. This is amended up to a point by introducing the previous concept of overlapping patches but might not be enough for aerial views in which the objects can also occupy a big percentage of the image as well, and proper detection requires the spatial context of the full image. When objects occupy a large part of the image, it is usually because they are close to the capturing device. In these cases, it is not necessary to process the image at full resolution. A resize can be done and with that the neural network is able to foresee a global context. This is the advantage to provide a resize to the batch apart from the tiling patches.

In an embodiment, the 2D image (1) is a high-resolution image. In this context, it is understood that a high-resolution image is an image that is beyond 2K resolution, well above the typical resolutions processed by start-of-the-art neural networks. It is understood that a high-resolution image is an image that is typically 300 pixels per inch or higher. Preferably, the image is above 1920x1080 pixels per inch. A point beyond which the application of this method has clear potential benefits are aerial images above 1920x1080 pixels size.

In an embodiment, the patches (2) can be square or rectangular. The condition is that after patching/resizing the remaining size is equal to the input size of the inner neural network. Depending on the overall input size of the image and the desired overlap, more or less patches (2) can be generated.

In an embodiment, the reference point for each of the patches is the upper-left corner (2) of the patch.

Object detection finds bounding boxes around objects and classifies them. The position of a detected object is represented in the image by a bounding box, for instance, rectangular. In an embodiment, the method comprises the additional step of supressing or merging bounding boxes in the images.

Instance segmentation adds, for every detected object, a pixel mask that gives the shape of the object. More specifically, instance segmentation involves detecting objects and finding all the pixels that belong to each object. The objects in the images are shaded with a pixel mask.

The claimed method allows to benefit from using instance segmentation masks for suppressing/merging information between patches since these contain more fine-grained information of the object than bounding boxes.

In an embodiment, when resizing the taken image (1) to the input size of the neural network model, the method also comprises the step of adding constant padding in order not to deform the original image (1). Constant padding is a technique used to extend the borders of an image by adding a border of constant-value pixels around the edges of the original image. In other words, a constant value is used to fill the new border pixels.

At interference time, the proposed method acts as a wrapper to object detectors, implementing Graphics Processing Unit GPU-friendly routines for pre-processing and post-processing. According to the above, given for instance a high-resolution image, in an embodiment the inference/prediction workflow can be as follows:
- Slice/tile/patch the full resolution image into, for instance, overlapping patches (2) or portions of size equal to that of the input size of the neural network model, which becomes a hyperparameter, and save the coordinates of, for instance, the upper-left corner on the full-resolution image of each of the patches.
- Resize and pad the full image (1) to the resolution of the input size of the neural network model and save the coordinates of the upper-left corner of the resized image (1) on the full-resolution image and the scale of the resize.
- Stack the patches (2) and resize into a batch (3).
- Process the batch (3) to the inner object detection DL model to determine local detections.
- Use the saved patch (2) coordinates and scale to transform local detections to global image coordinates.
- Suppress/merge the bounding boxes with class-aware (or agnostic) Intersection-over-Smaller area (IoS)/Intersection-over-Union (IoU) style metrics and a threshold. Redundant boxes are removed/joined due to excessive overlap, as they are understood to correspond to the same detected object. The most common metrics used for this are IoU and IoS. With a threshold it is decided whether to remove/join.

The most relevant conditions under which the method has been tested are as follows:
Input images:
   - 2048 × 2448 (5 Megapixels).
Internal neural network:
   - YOLOv7 tiny architecture (has approx. 6 million parameters) for a network input size of 640 × 640
Inference:
   - Half precision (float16) using tensor cores with NVIDIA^{®} TensorRT^{™} inference framework.
   - Low-end desktop 6 GB VRAM RTX3060 NVIDIA GPU
   - 12th Gen Intel(R) Core(TM) i7-12650H CPU with 16GB DDR4 RAM

The method runs at roughly 33 Hz counting with CPU/GPU upload/download times, which it's not always necessary if the image already comes loaded into the GPU, or 40 Hz without CPU/GPU upload/download times. This is more than enough to be considered real-time given the typical frames per second (FPS) of high-resolution cameras.

As previously stated, the input data to train the neural network model needs to follow a distribution similar to what it is going to receive during inference when training the neural network.

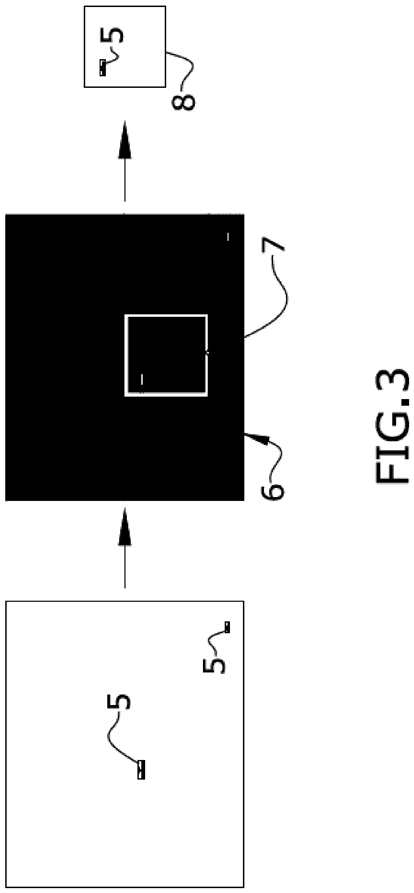

As can be seen in figure 3, the training method comprises the step of performing training data augmentation by:
- using labels in the form of bounding boxes or instance segmentation masks to generate binary mask images (6) of the 2D images,
- cropping regions (7) around objects in the generated binary mask images (6), said cropped regions (7) being of size equal to the input size of the neural network model,
- feeding the images (8) corresponding to the cropped regions (7) to the neural network model.

Thus, the augmentation is applied by cropping with the size defined for the neural network input. It is also applied with a certain probability. For example, if a probability of 0.8 is defined, there is an 80% chance that the cropping will be applied. If it does not apply, what is feed into the training is a resized 2D image.

## Claims

1. Aerial image-based object detection method comprising the use of a neural network model on a Graphics Processing Unit (GPU), the neural network model comprising an input size, **characterized in that** the method comprises the following steps:
- taking a 2D image (1) by an image capturing device,
- dividing in the Graphics Processing Unit (GPU) the taken 2D image (1) into patches (2) of size equal to the input size of the neural network model,
- saving in the Graphics Processing Unit (GPU) the coordinates of the same reference point for each of the patches (2),
- resizing the taken 2D image (1) to the input size of the neural network model in the Graphics Processing Unit (GPU),
- saving in the Graphics Processing Unit (GPU) the coordinate of a reference point of the resized taken 2D image (1) and the scale of the resize,
- stacking into a batch (3) the patches (2) and the resize of the taken 2D image (1) in the Graphics Processing Unit (GPU),
- passing the batch (3) to the neural network model to determine object detections in each stacked patch (2) and in the resized 2D image (1),
- transforming the local detections to a reunified image (4) by using the saved patch coordinates so that said reunified image is formed.

2. Aerial image-based object detection method, according to claim 1, wherein the reference point of the saved patch coordinate is the upper-left corner of the patches (2).

3. Aerial image-based object detection method, according to any preceding claim, wherein the 2D image (1) is a high-resolution image.

4. Aerial image-based object detection method, according to any preceding claim, wherein the patches (2) are overlapping patches (2).

5. Aerial image-based object detection method, according to any preceding claim, wherein detected objects are represented in the images by a bounding box.

6. Aerial image-based object detection method, according to claim 5, wherein it comprises the additional step of supressing or merging bounding boxes in the images.

7. Aerial image-based object detection method, according to any preceding claim, wherein when resizing the taken 2D image (1) to the input size of the neural network model it also comprises the step of adding constant padding in order not to deform the original image (1).

8. Aerial image-based object detection method, according to any preceding claim, wherein the patches (2) are square or rectangular.

9. Training method of a neural network model of the aerial image-based detection method according to any preceding claim on a Graphics Processing Unit (GPU), wherein from a training data set comprising 2D images the training method comprises the step of performing training data augmentation by:
- using labels in the form of bounding boxes or instance segmentation masks to generate binary mask images (6) of the 2D images,
- cropping regions (7) around objects in the generated binary mask images (6), said cropped regions (7) being of size equal to the input size of the neural network model,
- feeding the images (8) corresponding to the cropped regions (7) to the neural network model.

10. A computer-readable storage medium comprising instructions which, when executed in a Graphics Processing Unit (GPU), causes the Graphics Processing Unit (GPU) to carry out the method of any of claims 1 to 8.

11. Aerial image-based object detection system comprising a neural network model running on a Graphics Processing Unit (GPU), the system **characterized in that** it comprises:
- an image capturing device configured for taking a 2D image (1),
- the Graphics Processing Unit (GPU) being configured for:
- receiving the taken 2D image (1) from the image capturing device,
- dividing the taken 2D image (1) into patches (2) of size equal to the input size of the neural network model,
- saving the coordinate of the same reference point for each of the patches (2),
- resizing the taken image (1) to the input size of the neural network model,
- saving the coordinate of a reference point of the resized taken image (1) and the scale of the resize,
- stacking into a batch (3) the patches (2) and the resize of the taken image (1) in the graphics processing unit (GPU),
- passing the batch (3) to the neural network model to determine object detections in each stacked patch (2) and in the resized image (1),
- transforming the local detections to a reunified image (4) by using the saved patches coordinates.
